# EUROPÄISCHE PATENTSCHRIFT

(11) **EP 1 543 753 B1**
(45) Veröffentlichungstag und Bekanntmachung des Hinweises auf die Patenterteilung: **12.09.2007**
(21) Anmeldenummer: 04030018.8
(22) Anmeldetag: 17.12.2004
(51) Int. Cl.: A47J 39/00, F28D 20/00, F28D 20/02

(54) **Heizsystem für den Einsatz in Bordküchen von Verkehrsmitteln sowie ein Verfahren zur Erwärmung von Nahrungsmitteln an Bord von Verkehrsmitteln, insbesondere Luftfahrzeugen**
Heating system for use in galleys in transport means and a method of on-board heating of food in transport means, particularly in aircraft
Système de chauffage utilisé dans la cuisine de bord dans des moyens de transport et un procédé de chauffage des aliments à bord des moyens de transport, en particulier à bord des aéronefs

(30) Priorität: 20.12.2003 DE 10360303
(43) Veröffentlichungstag der Anmeldung: 22.06.2005
(73) Patentinhaber: Airbus Deutschland GmbH, 21129 Hamburg (DE)
(72) Erfinder: Höhne, Merle, 21029 Hamburg (DE); Höhne, Joachim, 21029 Hamburg (DE); Heinrich, Hans-Jürgen, 22609 Hamburg (DE)
(74) Vertreter: Maiwald Patentanwalts GmbH

(56) Entgegenhaltungen:
- DE-C1- 3 639 545
- US-A- 4 936 377
- US-A- 6 108 489
- US-B1- 6 392 201

## Beschreibung

Die Erfindung betrifft ein Heizsystem für den Einsatz in Bordküchen von Verkehrsmitteln sowie ein Verfahren zur Erwärmung von Nahrungsmitteln an Bord von Verkehrsmitteln, insbesondere Luftfahrzeugen.

An Bord von Luftfahrzeugen, sowie in anderen mobilen Einrichtungen werden Geräte zur Erwärmung von Speisen betrieben. Die Speisen werden dabei in der Regel von Gastronomieuntemehmen im sogenannten Catering in fertig gegartem Zustand angeliefert und müssen kurz vor dem Servieren an die Passagiere produktschonend und zeitoptimiert erwärmt werden. Aufgrund einer unzureichenden und für die Produktqualität nicht optimierten Zuführung thermischer Energie in das Produkt, leiden häufig insbesondere die sensorische Qualität (Geschmack, Konsistenz) und das Produktaussehen.

Darüber hinaus führen beim gleichzeitigen Betrieb mehrerer Heizgeräte (beispielsweise Öfen und Geräte zur Warmwasserbereitung) Lastspitzen im Bordküchenbetrieb in der Regel zu unerwünscht erhöhten Kosten, da sich für die gegebenenfalls auch nur kurzzeitig auftretende Leistungsnachfrage der Lastspitzen ein erhöhter Aufwand bei der Energiebereitstellung durch Generatoren, Energiezellen und anderen Stromquellen ergibt. Dieser erhöhte Aufwand findet sich unter anderem in negativen Begleitfolgen für Luftfahrzeuge wieder wie Anlagen- und Betriebskosten sowie Gewicht- und Bauvolumenbedarf durch Dimensionierung der Stromquelle für den Fall der maximalen Leistungsnachfrage (Lastspitze).

Bisherige Verfahren zur Einbringung zusätzlicher Wärmeenergie ohne Erhöhung der elektrischen Anschlussleistung sehen sensible, latente oder thermochemische Wärmespeichersysteme zur Zusatzbeheizung vor.

In WO 99/63277 wird ein Gargerät mit Zusatzaggregat auf Basis von Speicherung und Entnahmesystem latenter Wärme beschrieben, welches zur Kompensation von Spitzenlasten genutzt werden kann.

In DE 3639545 C1 ist ein Verfahrensprinzip zur Wärmespeicherung und -transformation sowie Kälteerzeugung mit Hilfe von zwei in einem geschlossenen Kreislauf bei verschiedenen Temperaturen im Verbund arbeitenden Metallhydrid/Metall-Wasserstoff Systemen beschrieben. Viele Metalle reagieren in technisch relevanten Temperatur- und Druckbereichen mit Wasserstoff unter hoher Wärmetönung zu Metallhydrid. Durch Variation des anliegenden Wasserstoffdruckes kann die Wärmeabgabetemperatur variiert werden. Der Hochtemperaturspeicher kann dabei als Wärmeenergiepuffer für den Fall eines erhöhten Wärmeenergiebedarfs vorgesehen werden und Wärmeenergie an einen Kochtopf abgeben.

In US-A-6 392 201 wird ein Catering-Wagen beschrieben, welcher eine Latentwärmespeicherung aufweist.

Aufgabe der vorliegenden Erfindung ist es demnach, den Heizbetrieb von Bordküchen in Verkehrsmitteln mit Heizgeräten zu gewährleisten, die Lastspitzen im Bordküchenbetrieb vermeiden und dadurch zu einer Entlastung des elektrischen Bordnetzes im Verkehrsmittel führen. Weiterhin ist das Heizsystem so zu optimieren, dass eine für die Produkterwärmung ausreichende Wärmeleistung bei gleichzeitiger Beschränkung der absoluten Temperatur zur Produktschonung der zu erwärmenden Speisen zur Verfügung gestellt wird.

Diese Aufgabe wird erfindungsgemäß durch die im Patentanspruch 1 oder 6 genannten Maßnahmen gelöst.

Insbesondere ist mit dem vorgeschlagenen Heizsystem und dem Verfahren eine Optimierung der Energiebereitstellung für Geräte in Bordküchen erreicht. Zumindest ein Teil des Heizbetriebes oder der gesamte Heizbetrieb wird über ein geeignetes Wärmespeichermaterial gewährleistet, so dass die schnell verfügbare thermische Energie des Wärmespeichers in Phasen erhöhter Leistungsnachfrage innerhalb des Bordnetzes genutzt werden kann und dadurch zu einer Entlastung des elektrischen Bordnetzes führt. Der Speicher auf Basis latenter oder thermochemischer Wärmespeicherung wird hierbei nicht als Zusatzaggregat sondern als voll integrierter Bestandteil des Heizgerätes umgesetzt.

Der Wasserstoff wird im Fall der Nutzung eines Wärmespeichers auf Metallhydridbasis aus einem dezentralen Wasserstoffspeicher, Wasserstoffleitungssystem oder einer zentralen Wasserstofferzeugung (z.B. Reformierung) entnommen.

Während der Wasserstoff-Desorptionsphase, in welcher Wärmeenergie eingelagert wird, kann der Wasserstoff an einen der vorab als Quelle genannten Speicher, welcher ein Tieftemperaturhydrid enthält, bzw. ein Leitungssystem oder an eine Brennstoffzelle abgegeben werden. Außerhalb der Nutzungszeit des Heizgerätes, wird durch Kombination der hier offengelegten Heizgeräte mit einer Brennstoffzelle zusätzliche elektrische Energie erzeugt. Diese kann entweder für andere Verbraucher zur Verfügung gestellt werden oder aber für die elektrische Beheizung des Wärmespeichers während der Wasserstoff-Desorptionsphase genutzt werden, sofern keine andere Wärmequelle zeitgleich zur Verfügung steht.

Der Vorteil dieses Verfahrens besteht darin, die Beheizung über die Geräte im Ofenraum derart optimiert anbringen zu können, dass eine für die Produkterwärmung ausreichende Wärmeleistung bei gleichzeitiger Beschränkung der absoluten Temperatur durch geeignete Wärmespeichermaterialauswahl zur Produktschonung realisiert wird, ohne dass die Wärmeverteilung (z.B. über einen Ventilator) ein Anbrennen verhindern muss. Die elektrische Beheizung wird in die Behälter / Reaktoren integriert. Es wird damit ein hoher Energieeintrag ohne Überhitzung des Produktes gewährleistet. Der Energieeintrag kann durch Wärmestrahlung, durch Ausnutzung der Wärmeleitung (ggf. unterstützt durch gut wärmeleitende Produktverpackungen - z.B. Aluminiumschalen) oder durch ein Wärmeträgerfluid zur aufzuwärmenden Speise erfolgen.

Ein weiterer Vorteil der integrierten Ausführung des hier offengelegten Heizsystems ergibt sich aus einer gewichtssparenden Bauweise der Reaktoren, welche durch folgende Faktoren gekennzeichnet sind: z.B.
- geringe Wanddicken,
- Kompaktierung des Metallhydridmaterials
- Nutzung von direkten Wärmeübergängen (Metallhydrid - Wand - Menüschale - Essen, wobei kein zusätzliches Wärmeträgermedium verwendet werden muss).

Weiterbildungen und vorteilhafte Ausgestaltungen der Erfindung sind in den Ansprüchen 2 bis 5 angegeben. Weitere Ausgestaltungen des erfindungsgemäßen Verfahrens sind in den Unteransprüchen 7 bis 12 beschrieben.

Weitere Einzelheiten und Vorteile ergeben sich aus der nachfolgenden Beschreibung eines Ausführungsbeispiels der Erfindung.

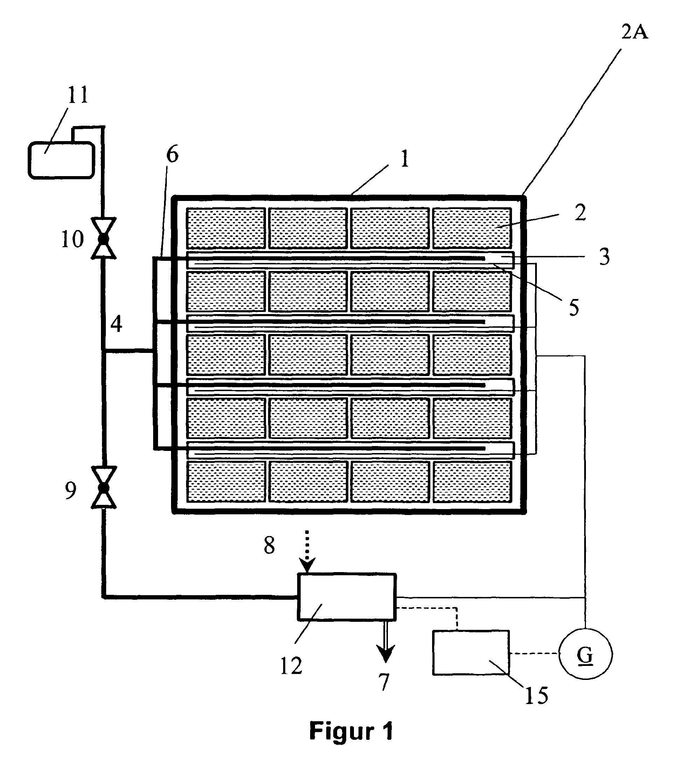

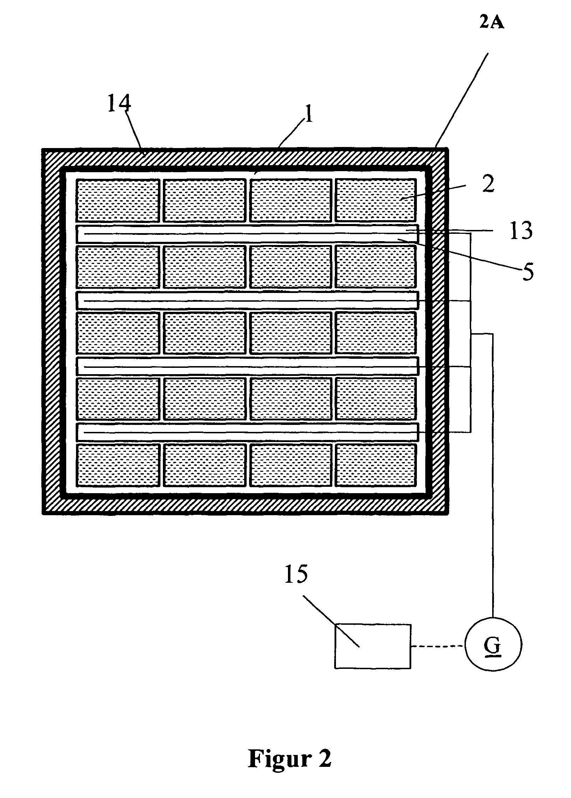

In der Zeichnung sind Ausführungsbeispiele nach der Erfindung dargestellt, welche nachstehend anhand der Figuren 1 und 2 näher beschrieben ist. In den Figuren sind gleiche Bauteile mit gleichen Bezugszeichen versehen

Die Figuren 1 und 2 zeigen jeweils in schematischer Darstellung eine Ausführungsform eines Heizsystems für den Einsatz in Bordküchen von Verkehrsmitteln mit dem ein Verfahren zur Erwärmung von Nahrungsmitteln durchgeführt werden kann.

Zur Entlastung des elektrischen Bordnetzes, beispielsweise an Bord von Luftfahrzeugen, kann der Gesamtlastanteil zur Wärmebereitstellung im Ofenraum ein geeignetes Wärmespeichermaterial auf Basis latenter oder thermochemischer Wärmespeicherung gewährleistet werden, welches voll in Bauelemente des betreffenden Heizgerätes integriert wird. Die Beheizung wird im Heiz- oder Ofenraum derart integriert, dass eine für die Produkterwärmung ausreichende Wärmeleistung bei gleichzeitiger Beschränkung der absoluten Temperatur durch geeignete Wärmespeichermaterialauswahl zur Produktschonung realisiert wird, ohne dass die Wärmeverteilung (beispielsweise über einen Ventilator) ein Anbrennen verhindern muss.

Der Speicher auf Basis latenter oder thermochemischer Wärmespeicherung wird hierbei nicht als Zusatzaggregat, sondern als voll integrierter Bestandteil des Heizgerätes umgesetzt.

Es werden die folgenden Begriffsdefinitionen angewendet:
- Latente Wärmespeicherung: Schaffung eines verfügbaren Energievorrates durch Phasenwechsel des Speichermediums (z.B. fest / flüssig)
- Sensible Wärmespeicherung: Schaffung eines verfügbaren Energievorrates durch Temperaturänderung des Speichermediums
- Thermochemische Wärmespeicherung: Schaffung eines verfügbaren Energievorrates durch chemische Reaktion des Speichermediums
- Wärmespeicher: Aggregat zur Zwischenspeicherung von thermischer Energie
- Wasserstoffspeicher: Aggregat zur Zwischenspeicherung von Wasserstoff
- Hochtemperaturhydrid: Metallhydrid welches einen Wasserstoff-Desorptionsdruck von 1 bar bei Temperaturen oberhalb von 200 °C aufweist.
- Tieftemperaturhydrid: Metallhydrid welches einen Wasserstoff-Desorptionsdruck von 1 bar bei Temperaturen unterhalb von 100 °C aufweist.

Bei dem in Figur 1 dargestellten Heizsystem für den Einsatz in Bordküchen von Verkehrsmitteln wird ein Heizgerät 1 zur Erwärmung von Nahrungsmitteln dargestellt, bei der als Heizmedium ein Wärmespeicher 3 mit Hochtemperaturmetallhydrid eingesetzt wird. Das Heizgerät 1, beispielsweise als Ofen zur Speisenerwärmung in Flugzeugen ausgebildet, weist einen Heizraum 2A auf, in dem beispielsweise Catering-Behälter 2 mit den zu erwärmenden Speisen angeordnet sind. Der Heizraum 2A kann in einer weiteren, nicht gezeigten Ausgestaltungsform in einer Art und Weise ausgebildet sein, dass dieser gezielt zur Erhitzung von Flüssigkeiten wie beispielsweise Wasser im Durchlauf- oder Speicher- (Boiler) Verfahren genutzt wird und in Kaffeemaschinen, Heißwassergeräten, allgemeinen Warmwassergeräten und ähnlichen Apparaten Anwendung findet.

Das Hochtemperaturmetallhydrid ist ein thermochemischer Wärmespeicher 5, der durch chemische Reaktion des Speichermediums zur Schaffung eines verfügbaren Energievorrates eingesetzt wird. Als Metallhydrid ist beispielsweise eine Magnesiumlegierung einsetzbar.

In Niedriglastzeiten wird Wasserstoff unter Zufuhr von Wärmeenergie mittels elektrischer Heizelemente 5 desorbiert. Dieser Wasserstoff kann über ein Wasserstoffleitungssystem 4 und ein Ventil 10 entweder einer Wasserstoffspeichereinheit 11 zugeführt werden oder über ein Ventil 9 einer Brennstoffzelle 12 als Brennstoff zur Verfügung gestellt werden. Die frei werdende Energie der Brennstoffzelle kann wiederum zur Beheizung der Speicherelemente 3 genutzt werden. Alternativ erfolgt die Bereitstellung der Energie über eine Gleichstromquelle (G) oder über das Bordnetz des Verkehrsmittels. Ein geeignetes Regelsystem mit einer Regeleinheit 15 gewährleistet den Betrieb im Bereich des Lastminimums bzgl. der erforderlichen elektrischen Leistung. Ist der Wasserstoff vollständig desorbiert, liegt in den Heizelementen reines Metall vor. Soll nun der Inhalt der Catering-Behälter 2 auf eine gewünschte Verzehrtemperatur aufgeheizt werden, so wird Wasserstoff aus dem Wasserstoffspeicher 11 bei einem Druck, welcher oberhalb des Absorptionsdruckes des eingesetzten Metall(hydrid)s bei der gewünschten Temperatur liegt, zugeführt. Die Höhe dieses Druckes variiert mit der Absorptionstemperatur und ist stoffspezifisch. Ein geeignetes gewichtsoptimiertes Rohrleitungssystem, welches mit geringen Wanddicken, entsprechender Materialauswahl und kurzen Strecken realisiert wird, als Wasserstoffverteilsystem 6 gewährleistet eine gleichmäßige Reaktion und damit Wärmefreisetzung in den Heizelementen. Sofern die Catering-Behälter 2 aus gut wärmeleitenden Materialien bestehen, wirken diese als zusätzliche Wärmeleitstrukturen. In diesem Fall ist ein direkter Kontakt zwischen den die Heizelemente 5 beinhaltenden Wärmespeichern 3 und Catering-Behältern 2 wünschenswert.

Die elektrische Beheizung zur Bereitstellung von Wärme während der Wärmeeinspeicherung, sowie als optionale Ergänzung der vom Wärmespeicher abgegebenen Wärmeleistung während der Wasserstoffabsorption kann derart in die Bauteile des Heizgerätes 1 integriert werden, dass die Strahlungswärme der elektrischen Heizelemente 5 so vergleichmäßigt wird, dass es nicht zur Zerrstörung des Produktes/Nahrungsmittels führt.

Bei einer Nutzung des Wärmespeichers 3 auf Metallhydridbasis mit der beschriebenen Kombination des Heizgeräts 1 mit der Brennstoffzelle 12 kann während der Wasserstoff-Desorptionsphase des Wärmespeichers der abgegebene Wasserstoff zur Erzeugung zusätzlicher elektrischer Energie eingesetzt wird, wobei die erzeugte elektrische Energie entweder für andere Verbraucher im Bordenergienetz zur Verfügung gestellt wird oder aber für die elektrische Beheizung des Wärmespeichers während der Wärmeeinspeicherung selbst genutzt wird.

Bei der in Figur 2 gezeigten Verfahrensvariante wird statt des Metallhydrids ein Latentwärmespeichermaterial 13 in den die Heizelemente 5 beinhaltenden Wärmespeichern 3 integriert. Dieses wird in Niedriglastzeiten über die elektrischen Heizelemente 3 (oder eine sonstige Wärmequelle) auf die gewünschte Temperatur aufgeheizt. Eine Regelung der Energiezufuhr erfolgt über eine Regeleinheit 15. Um den Energieverlust in den Stillstandszeiten gering zu halten, ist eine besondere Isolation 14 des gesamten Heizraumes 2A vorzusehen. Zur Erwärmung der Speisen werden die Catering-Behältem 2 in das Heizsystem eingeschoben und der Wärmespeicher gibt zur Erwärmung der Speisen gleichmäßig Wärme ab. Durch Auswahl von geeignetem Wärmespeichermaterial kann eine produktschonende Erwärmung der Nahrungsmittel erfolgen.

In beiden Varianten kann die Beheizung im Heiz- oder Ofenraum 1 zur Erhöhung der Wärmeverteilung durch eine zusätzliche Umwälzung eines Wärmeträgers (z.B. Luft, Wasser) ergänzt werden.

Das gesamte Anlagendesign erfolgt unter Einhaltung der speziellen Sicherheitsanforderungen der jeweiligen Verkehrsmitteln weitgehend gewichts- und platzoptimiert.

### Bezugszeichenliste

- 1: Heizsystem zur Erwärmung von Nahrungsmitteln
- 2: Catering-Behälter
- 2A: Heizraum
- 3: Wärmespeicher
- 4: Wasserstoffleitungssystem
- 5: elektrische Heizelemente
- 6: Wasserstoffverteilsystem im Speicher
- 7: Wasserabfuhr
- 8: Luftzufuhr
- 9: Ventil zur Brennstoffzelle
- 10: Ventil zur Wasserstoffspeichereinheit
- 11: Wasserstoffspeichereinheit
- 12: Brennstoffzelle
- 13: Latentwärmespeichermaterial
- 14: Isolation
- 15: Regeleinheit
- G: Gleichstromquelle

## Patentansprüche

1. Heizsystem für den Einsatz in Bordküchen von Verkehrsmitteln, insbesondere an Bord von Luftfahrzeugen zur Erwärmung von Nahrungsmitteln, wobei in einem Heizraum (2A) Catering-Behälter (2) angeordnet sind und elektrische Heizelemente (5) in dem Heizraum (2A) mit einem Wärmespeicher (3, 13) in Wirkverbindung stehen, **dadurch gekennzeichnet, daß** eine Teil- oder die Gesamtlast zur Wärmebereitstellung an das Produkt auf Basis thermochemischer Wärmespeicherung bei gleichzeitiger Beschränkung der absoluten Temperatur gewährleistet wird.

2. Heizsystem nach Anspruch 1, **dadurch gekennzeichnet, dass** als thermochemischer Wärmespeicher (3) ein Hochtemperaturmetallhydrid einsetzbar ist, wobei der Wärmespeicher (3) über ein Wasserstoffleitungssystem (4) und einem Ventil (10) mit einer Wasserstoffspeichereinheit (11) oder über ein Ventil (9) mit einer zentralen Wasserstofferzeugung (Brennstoffzelle (12) verbunden ist.

3. Heizsystem nach Anspruch 1, **dadurch gekennzeichnet, dass** eine für die Produkterwärmung ausreichende Wärmeleistung bei gleichzeitiger Beschränkung der absoluten Temperatur durch geeignete Wärmespeichermaterialauswahl (13) realisierbar ist.

4. Heizsystem nach einem Anspruch 1 bis 3, **dadurch gekennzeichnet, dass** zur Wärmeverteilung im Heizraum (2A) zusätzlich eine Umwälzung des Wärmeträgers, beispielsweise mittels eines Ventilators, vorgesehen ist.

5. Heizsystem nach einem der Ansprüche 1 und 2, **dadurch gekennzeichnet, dass** eine Regeleinheit (15) die Zuführung der elektrischen Energie zu den elektrischen Heizelementen (5) entweder durch eine Gleichstromquelle oder durch die frei werdende Energie der Brennstoffzelle (12) regelt.

6. Verfahren zur Erwärmung von Nahrungsmitteln in Catering-Behältem, welche sich in einem Heizraum an Bord von Verkehrsmitteln, insbesondere Luftfahrzeugen, befinden, **dadurch gekennzeichnet, dass** eine für die Produkterwärmung ausreichende Wärmeleistung bei gleichzeitiger Beschränkung der absoluten Temperatur durch latente oder thermochemische Wärmespeicher (3; 13) erzeugt wird, wobei die Wärmespeicher (3; 13) mit elektrischen Heizelementen (5) des Heizraumes (2A) in Wirkverbindung stehen.

7. Verfahren nach Anspruch 6, **dadurch gekennzeichnet, dass** bei Anwendung eines Wärmespeichers auf Metallhydridbasis (thermochemischer Wärmespeicher) der Wasserstoff in der Absorptionsphase, also der Wärmefreisetzung, einem dezentralen Wasserstoffspeicher, Wasserstoffleitungssystem oder einer zentralen Wasserstofferzeugung (z.B. Reformierung) entnommen wird und in der Desorptionsphase, also der Wärmeaufnahme, an einen dezentralen Wasserstoffspeicher oder ein Wasserstoffleitungssystem abgegeben wird.

8. Verfahren nach Anspruch 6, **dadurch gekennzeichnet, dass** bei Anwendung eines Wärmespeichers auf Metallhydridbasis (thermochemischer Wärmespeicher) das Heizgerät mit einer Brennstoffzelle kombiniert wird und während der Wasserstoff-Desorptionsphase des Wärmespeichers der abgegebene Wasserstoff zur Erzeugung zusätzlicher elektrischer Energie eingesetzt wird.

9. Verfahren nach Anspruch 8, **dadurch gekennzeichnet, dass** die mit einer Brennstoffzelle zusätzlich erzeugte elektrische Energie entweder für andere Verbraucher im Bordenergienetz zur Verfügung gestellt wird oder aber für die elektrische Beheizung des Wärmespeichers während der Wärmeeinspeicherung selbst genutzt wird.

10. Verfahren nach einem der Ansprüche 6 bis 9, **dadurch gekennzeichnet, dass** die Beheizung im Heiz- oder Ofenraum zur Erhöhung der Wärmeverteilung durch eine zusätzliche Umwälzung eines Wärmeträgers (z.B. Luft, Wasser) ergänzt wird.

11. Verfahren nach einem der Ansprüche 6 bis 10, **dadurch gekennzeichnet, dass** die elektrische Beheizung zur Bereitstellung von Wärme während der Wärmeeinspeicherung, sowie als optionale Ergänzung der vom Wärmespeicher abgegebenen Wärmeleistung während der Wasserstoffabsorption derart in Bauteile des Heizgerätes integriert wird, dass Strahlungswärme der elektrischen Heizelemente ebenfalls nicht zur Zerrstörung des Produktes führt (Vergleichmäßigung der Wärmestrahlung).

12. Verfahren nach Anspruch 6, **dadurch gekennzeichnet, dass** bei Anwendung eines Wärmespeichers mit Latentwärmespeichermaterial bei Niedriglastzeiten im Bordnetz des Verkehrsmittels der Wärmespeicher aufgeheizt wird und der Wärmespeicher im isolierten Heizraum (2A) nach dem Einschieben der Catering-Container (2) mit Nahrungsmitteln Wärme abgibt.

## Claims

1. Heating system for use in on-board kitchens of means of transport, in particular on board aircraft, for heating up food, wherein catering containers (2) are arranged in a heating area (2A) and electric heating elements (5) in the heating area (2A) are in operative connection with a heat store (3, 13), **characterised in that** part or all of the bad for the provision of heat to the product is guaranteed on the basis of thermochemical heat storage with the simultaneous limitation of the absolute temperature.

2. Heating system according to claim 1, **characterised in that** a high temperature metal hydride can be used as the thermochemical heat store (3), wherein the heat store (3) is connected to a hydrogen storage unit (11) by means of a hydrogen routing system (4) and a valve (10) orto a central hydrogen producer (fuel cell) (12) by means of a valve (9).

3. Heating system according to claim 1, **characterised in that** a heat output sufficient to heat the product can be achieved with the simultaneous limitation of the absolute temperature by means of an appropriate choice of heat storage material (13).

4. Heating system according to any one of claims 1 to 3, **characterised in that** for distributing the heat in the heating area (2A), circulation of the heat carrier is provided, for example by means of a ventilator.

5. Heating system according to either claim 1 or claim 2, **characterised in that** a control unit (15) regulates the supply of electrical energy to the electric heating elements (5), either by means of a direct current source or by means of the energy released from the fuel cell (12).

6. Method for the heating of food in catering containers which are located in a heating area on board means of transport, in particular aircraft, **characterised in that** a heat output sufficient to heat the product is achieved with the simultaneous limitation of the absolute temperature by latent orthermochemical heat stores (3, 13), wherein the heat stores (3, 13) are in operative connection with electric heating elements (5) of the heating area (2A).

7. Method according to claim 6, **characterised in that** when using a heat store based on metal hydride (thermochemical heat store), in the absorption phase, ie the heat release, the hydrogen is removed from a decentralised hydrogen store, hydrogen routing system or a central hydrogen producer (eg reforming) and in the desorption phase, ie during heat takeup, it is released into a decentralised hydrogen storage unit or a hydrogen routing system.

8. Method according to claim 6, **characterised in that**, when using a heat store based on metal hydride (thermochemical heat store), the heating device is combined with a fuel cell and, during the hydrogen desorption phase of the heat store, the hydrogen released is used to produce additional electrical energy.

9. Method according to claim 8, **characterised in that** the additional electrical energy generated with a fuel cell is either made available to other users in the on-board power supply network or is used for the electrical heating of the heat store itself during heat storage.

10. Method according to any one of claims 6 to 9, **characterised in that** the heating in the heating area or oven area is supplemented by an additional circulation of a heat carrier (eg air, water) to increase the heat distribution.

11. Method according to any one of claims 6 to 10, **characterised in that** the electrical heating for the provision of heat during the heat storage and as an optional addition to the heat output released by the heat store during the hydrogen absorption is integrated into the components of the heating device in such a way that radiant heat from the electric heating elements does not also lead to the destruction of the product (homogenisation of the heat radiation).

12. Method according to claim 6, **characterised in that** when using a heat store with latent heat storage material, the heat store is heated up during periods of bw loading in the onboard supply of the means of transport and the heat store releases heat in the insulated heating area (2A) after the catering containers (2) with food have been pushed in.

## Revendications

1. Système chauffant destiné à l'emploi dans des cuisines de bord de moyens de transport, en particulier à bord d'aéronefs, pour réchauffer des aliments, des conteneurs de restauration (2) étant disposés dans une chambre de chauffage (2A), et des éléments chauffants (5) électriques étant en liaison de coopération, dans la chambre de chauffage (2A), avec un accumulateur de chaleur (3, 13), **caractérisé en ce que** la charge partielle ou totale destinée à apporter de la chaleur au produit est assurée sur la base d'une accumulation de chaleur thermochimique, avec limitation synchronisée de la température absolue.

2. Système chauffant selon la revendication 1, **caractérisé en ce qu'**un hydrure de métal à haute température peut être employé comme accumulateur de chaleur (3) thermochimique, l'accumulateur de chaleur (3) étant relié à une unité de stockage d'hydrogène (11) par l'intermédiaire d'un système de conduites d'hydrogène (4) et d'une vanne (10), ou à un générateur d'hydrogène (pile à combustible) (12), par l'intermédiaire d'une vanne (9).

3. Système chauffant selon la revendication 1, **caractérisé en ce qu'**une puissance suffisante pour réchauffer les produits peut être réalisée avec limitation synchronisée de la température absolue, par une sélection adaptée du matériau accumulateur de chaleur (13).

4. Système chauffant selon l'une des revendications 1 à 3, **caractérisé en ce que** pour répartir la chaleur dans la chambre de chauffage (2A) une circulation du caloporteur est prévue en supplément, par exemple au moyen d'un ventilateur.

5. Système chauffant selon l'une des revendications 1 à 2, **caractérisé en ce qu'**une unité de régulation (15) régule l'amenée de l'énergie électrique aux éléments chauffants (5) soit par l'intermédiaire d'une source de courant continu, soit par l'intermédiaire de l'énergie dégagée par la pile à combustible.

6. Procédé pour réchauffer des aliments dans des conteneurs de restauration qui se trouvent dans une chambre de chauffage, à bord de moyens de transports, en particulier d'aéronefs, **caractérisé en ce qu'**une puissance de chauffage suffisante pour réchauffer des produits est générée, avec limitation synchronisée de la température absolue, par des accumulateurs de chaleur latents ou thermochimiques (3 ; 13), les accumulateurs de chaleur (3 ; 13) étant en liaison de coopération avec des éléments chauffants électriques (5) de la chambre de chauffage (2A).

7. Procédé selon la revendication 6, **caractérisé en ce que** lorsque est utilisé un accumulateur de chaleur à base d'hydrure de métal (accumulateur de chaleur thermochimique), l'hydrogène est prélevé dans la phase d'absorption c'est-à-dire de dégagement de chaleur, à partir d'un stockeur d'hydrogène décentralisé, d'un système de conduites d'hydrogène ou d'un générateur d'hydrogène central (p. ex. reformeur) et est transmis dans la phase de désorption c'est-à-dire de captage de chaleur, à un stockeur d'hydrogène décentralisé ou à un système de conduites d'hydrogène.

8. Procédé selon la revendication 6, **caractérisé en ce que** lorsqu'est utilisé un accumulateur de chaleur à base d'hydrure de métal (accumulateur de chaleur thermochimique), l'appareil de chauffage est combiné avec une pile à combustible et, pendant la phase de désorption d'hydrogène de l'accumulateur de chaleur, l'hydrogène dégagé est utilisé pour produire de l'énergie électrique supplémentaire.

9. Procédé selon la revendication 8, **caractérisé en ce que** l'énergie électrique produite en supplément avec une pile à combustible, est mise à disposition pour d'autres consommateurs sur le réseau d'énergie du bord ou encore est utilisée pour le chauffage électrique de l'accumulateur de chaleur pendant l'accumulation de l'énergie de chauffage elle-même.

10. Procédé selon l'une des revendication 6 à 9, **caractérisé en ce que**, pour augmenter la répartition de chaleur, le chauffage dans l'enceinte chauffante ou de four est complété, par une circulation supplémentaire d'un caloporteur (p. ex. air, eau).

11. Procédé selon l'une des revendications 6 à 10, **caractérisé en ce que** le chauffage électrique destiné à fournir de la chaleur pendant la phase d'accumulation de chaleur, ainsi que comme complément optionnel de la puissance de chauffage dégagée par l'accumulateur de chaleur pendant l'absorption d'hydrogène est intégré dans des pièces de l'appareil chauffant, de telle façon que la chaleur rayonnante des éléments chauffants, électriques ne conduit pas non plus à la destruction du produit (équilibrage du rayonnement thermique).

12. Procédé selon la revendication 6, **caractérisé en ce que** lorsque est utilisé un accumulateur de chaleur à matériau d'accumulation de chaleur latente, dans le cas de temps de charge réduits sur le réseau de bord du moyen de transport, l'accumulateur de chaleur est chauffé et l'accumulateur restitue de la chaleur dans la chambre de chauffage isolée (2A) après l'insertion des conteneurs de restauration (2) contenant des aliments.
